# EUROPEAN PATENT SPECIFICATION

(11) **EP 0 832 306 B1**
(45) Date of publication and mention of the grant of the patent: **05.01.2000**
(21) Application number: 96915925.0
(22) Date of filing: 07.06.1996
(51) Int. Cl.: C22B 23/00, C22B 11/00, C22B 15/00, C22B 3/26, C22B 3/38, C22B 3/06, C25C 1/08

(54) **CHLORIDE ASSISTED HYDROMETALLURGICAL EXTRACTION OF NICKEL AND COBALT FROM SULPHIDE ORES**
CHLORIDUNTERSTÜTZTE HYDROMETALLURGISCHE EXTRAKTION VON NICKEL UND KOBALT AUS SULPHIDERZEN
EXTRACTION HYDROMETALLURGIQUE, ASSISTEE PAR DES CHLORURES DE NICKEL ET DE COBALT A PARTIR DE MINERAIS SULPHURES

(30) Priority: 07.06.1995 US 488128
(43) Date of publication of application: 01.04.1998
(60) Divisional application: 98204322.6
(73) Proprietor: COMINCO ENGINEERING SERVICES LTD., Vancouver, British Columbia V6C 3L7 (CA)
(72) Inventor: JONES, David, L., Delta, British Columbia V4M 2X8 (CA)
(74) Representative: Gilding, Martin John
(86) International application number: PCT/CA96/00365
(87) International publication number: WO 96/41029

(56) References cited:
- EP-A- 0 209 272
- EP-A- 0 651 062
- FR-A- 1 559 880
- GB-A- 970 011
- GB-A- 2 018 732
- US-A- 2 520 958
- US-A- 3 981 968
- US-A- 4 039 406
- US-A- 4 108 639
- US-A- 4 457 897
- US-A- 4 600 435
- US-A- 4 818 503
- US-A- 4 861 371
- US-A- 4 971 662

## Description

### FIELD OF THE INVENTION

This invention relates to the hydrometallurgical treatment of metal ores or concentrates. In particular, it relates to the extraction of metals from sulphide and laterite ores in the presence of halogen ions, such as chloride ions.

### BACKGROUND OF THE INVENTION

Nickel sulphide ores are presently treated in commercial practise by a variety of processes in which the first step is almost always a physical concentration by flotation to upgrade the Ni content, typically, from a range of 0.5% to 2.0% up to 7 to 25% Ni, as a concentrate. The subsequent treatment of this concentrate is usually pyrometallurgical (smelting) to produce a Ni matte or an artificial high grade sulphide with about 20% to 75% Ni.

The matte is then generally refined to nickel products by hydrometallurgical techniques.

This combination of pyrometallurgical hydrometallurgical processing of Ni concentrates is now well established commercially with a number of variations, particularly in the hydrometallurgical portion. Most processes recover some portion of the associated metal values where present, such as copper and cobalt. In addition, a leach residue containing precious metals, such as gold and silver, as well as platinum group elements, e.g. platinum and palladium, is often produced for subsequent recovery of contained values.

This treatment scheme has some inherent drawbacks. Those associated with the pyrometallurgical step, include:
(i) Production of smelter gases including SO₂, which must now be treated in an acid plant to produce sulphuric acid byproduct, which frequently is difficult to market from a remote location. (The capital and operating costs of such acid plants impact on the overall economies of the process.)
(ii) Losses of nickel and particularly cobalt into the slag produced during smelting, often more than 50% of cobalt input.
(iii) High costs of smelting in general, particularly for low grade concentrates (<10% Ni).
(iv) Difficulty in treating certain concentrates with deleterious elements, such as magnesium (Mg) and arsenic (As).

The hydrometallurgical steps for treating Ni matte vary considerably but all known commercial processes have one or more of the following disadvantages:
(i) High costs for reagents such as caustic soda or ammonia, required for neutralization.
(ii) Large byproduct production, such as ammonium sulphate or sodium sulphate, which are difficult to market.
(iii) High energy costs, due to large temperature changes during the process.
(iv) Complex and costly process flowsheet, leading to high capital and operating costs.

As an alternative to the established pyrometallurgical/hydrometallurgical route outlined above, there is one known process using wholly hydrometallurgical steps, that treats concentrates without smelting. It uses a pressure leaching technique with ammoniacal solution. This avoids most of the disadvantages associated with the smelting processes, but unfortunately still suffers from all of the listed disadvantages of the known hydrometallurgical routes, and in fact is not even as efficient overall as the best of the pyrometallurgical/hydrometallurgical routes.

US-A-4457897 discloses a hydrometallurgical process for the recovery of cobalt from cobaltite-pyrite concentrates. The process comprises pressure leaching of the cobaltite-pyrite concentrates with a sodium chloride or sodium sulphate solution at a temperature in the range of 130 - 160°C and under oxygen partial pressures.

GB-A-2018732 discloses a process for recovering nickel from a nickel matte. The process comprises forming a slurry with water or an aqueous nickel sulphate solution, heating the slurry under pressure in the presence of oxygen to form a basic nickel sulphate and treating the reacted slurry with lime to convert the basic nickel sulphate to nickel hydroxide. This is then physically separated and dissolved in spent sulphate electrolyte for electrowinning.

Copper or nickel sulphide ores often also contain other metal values, such as cobalt, as well as precious metals, such as gold and silver and the platinum group metals. Since these ores are typically low grade ores, in so far as copper/nickel is concerned, and also have a high sulphur to copper/nickel ratio, the economical extraction of copper, nickel and cobalt values have been problematical. Some sulphide ores contain such low copper/nickel values that the recovery of precious metals must be high in order to render the process economical. Due to the pyrite content of some ores, the recovery of gold by conventional cyanidation is often difficult, which also renders the treatment of the ore uneconomical.

The present invention provides a process for the hydrometallurgical extraction of copper, nickel and cobalt as well as other metals from sulphide ores. It also provides a process for the hydrometallurgical extraction of nickel and cobalt from laterite ores.

According to the invention there is provided a process for the extraction of Ni/Co values from an ore or concentrate, comprising the steps of subjecting the ore or concentrate to pressure oxidation in the presence of oxygen and an acidic solution containing halide, copper and sulphate ions to obtain a liquor containing Ni/Co values from the resultant pressure oxidation slurry; subjecting the liquor to a selective precipitation treatment to obtain a solid containing Ni/Co hydroxide; and subjecting the solid to a Ni/Co leaching stage with an ammonium solution to produce a leach solution containing Ni/Co values and a residue.

The process may further comprise the steps of subjecting the residue to an acidic washing stage to produce a wash solution containing Ni/Co values and a discardable residue and recycling the wash solution to the selective precipitation treatment, or alternatively, treating the wash solution for the recovery of Ni/Co values therefrom.

The selective precipitation treatment may comprise the steps of subjecting the liquor to a precipitation stage at a pH of about 5 to 6 to precipitate iron, copper or zinc present in the liquor; and subjecting the resultant solution to a precipitation stage at a pH of about 7 to 8 to obtain the solid containing Ni/Co hydroxide.

The liquor containing the Ni/Co values may be obtained by subjecting the pressure oxidation slurry to neutralization at a predetermined pH at which copper, iron or zinc present in the slurry is in solid form and the Ni/Co values are in solution or, alternatively, the liquor containing the Ni/Co values may be obtained by subjecting the pressure oxidation slurry to neutralization at a predetermined pH at which the Ni/Co values are in solid form and subjecting the solid Ni/Co values to an acid leach to obtain the Ni/Co values in solution.

The process may further comprise the step of controlling the concentration of nickel in the leach solution to a maximum value of about 3-25 g/l, preferably 8-10 g/l and more preferably about 10 g/l.

The Ni/Co leaching stage may be effected with an ammonium sulphate solution. The concentration of the ammonium sulphate solution may be from about 150-250 g/l, preferably about 200 g/l.

The term "concentrate" in this specification refers to any material in which the metal value content has been increased to a higher percentage by weight as compared with the naturally occurring ore and includes man made artificial sulphide ore, such as matte, and metal values precipitated as solids such as hydroxides and sulphides.

Further objects and advantages of the invention will become apparent from the description of preferred embodiments of the invention below.

### BRIEF DESCRIPTION OF THE DRAWINGS

The invention will now be described by way of examples with reference to the accompanying drawings, in which:
Figure 1 is a flow diagram of a hydrometallurgical metal extraction process according to the invention;
Figure 2 is a flow diagram giving more details about the solvent extraction steps of the process of Figure 1;
Figures 3A and B show a flow diagram of a further embodiment of the process according to the invention for the recovery of precious metals; and
Figure 4 is a flow diagram of a hydrometallurgical metal extraction process according to another embodiment of the invention.

### DETAILED DESCRIPTION OF PREFERRED EMBODIMENTS

The process according to the invention is suitable for the treatment of copper ores, particularly copper sulphide ores, which also contain nickel and/or cobalt values, or nickel/cobalt sulphide ores without significant copper values, as well as nickel/cobalt oxide (laterite) ores. In addition, the process can treat nickel/cobalt ores with other elements often considered to be deleterious, such as magnesium, arsenic and zinc, or elements which are valuable and worth recovery, such as the precious metals, gold and silver, and the platinum group metals.

The feed ore or concentrate to the process may contain one or more sulphide minerals of the base metals Cu, Ni, Co and Zn, frequently combined with Fe and sometimes with other elements such as As, Sb, Ag, etc.

Typical sulphide minerals of the base metals listed above are:

| | | | |
|---|---|---|---|
| Copper | Cu₂S - | Chalcocite, | CuFeS₂ - Chalcopyrite |
| Nickel | NiS - | Millerite, | (Ni,Fe)₉S₈ - Pentlandite |
| Cobalt | Co₃S₄ - | Linnaeite, | (Co,Fe)AsS - Cobaltite |
| Zinc | ZnS - | Sphalerite, | (Zn,Fe)S - Marmatite |

The metal:sulphur ratio in this context is the ratio of the total base metals (Cu, Ni, Co, Zn) to sulphur in the concentrate, and this is a measure of the grade of the concentrate.

Typically the metal:sulphur ratio varies from 1.5 for high grade concentrates down to 0.2 for low grade concentrates. For concentrates that are predominantly Ni/Co, the metal:sulphur ratio is more often in the lower part of the range, from 0.2 to 0.8 (Fe is specifically excluded from this calculation, even though it is present in practically all sulphide concentrates).

The significance of the metal:sulphur ratio to the process, is that if affects the metallurgy occurring during the initial operation of pressure oxidation.

The different embodiments of the process according to the invention may be used to treat a range of Ni/Co concentrates in which the metal:sulphur ratio varies from low to high as outlined above. However, in addition to this ratio, there is another important characteristic which must be taken into account. The degree of sulphur oxidation (to sulphate) during pressure oxidation. Sulphur contained in concentrate is converted during pressure oxidation either to elemental sulphur (S°) (no sulphur oxidation), or oxidized to sulphate (SO₄⁻). Typically about 70-95% of the sulphur is not oxidized, and is produced as elemental sulphur. Expressed another way, sulphur oxidation (to sulphate) varies usually from 5 to 30%. It is considered beneficial to minimize sulphur oxidation, and it is an important objective of this process to do so. This is facilitated by the introduction of a source of sulphate or bisulphate, such as H₂SO₄, into the pressure oxidation stage.

The significance of sulphur oxidation is that it produces acid, which must eventually be neutralized, and it affects the distribution of Cu, Fe and other elements in the product slurry from pressure oxidation. Higher acid slurries (low pH) contain Cu in solution, whereas lower acid slurries (high pH) have Cu in solid form, as basic copper sulphate.

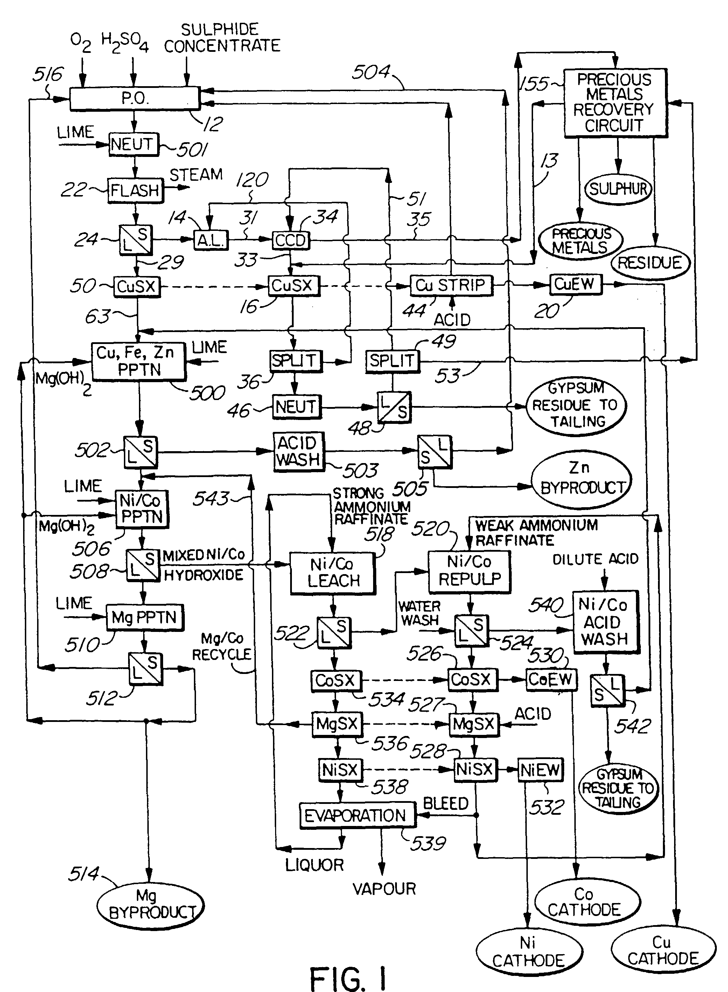

For concentrates with low metal:sulphur ratio and/or high sulphur oxidation, the process flowsheet shown in Figure 1 is the general case. This is referred to as Mode C. Enough acid is produced during pressure oxidation 12, that it is necessary to neutralize this acid by slaked lime in the latter stages of the autoclave. This is indicated as the neutralization 501 in Figure 1. Without this neutralization, the product slurry would have low pH, resulting in significant Fe in solution, and almost all of the Cu as well.

It is an important feature of the process that this product slurry contain minimal Fe in solution (less than 100 ppm) and about 1-5 g/l Cu in solution. By adjusting the amount of slaked lime added in the neutralization 501, these objectives can be achieved even with concentrates that have low metal:sulphur ratio and exhibit relatively high sulphur oxidation, e.g. 15-30%. A typical example of this type of concentrate is a pentlandite/pyrite type of mineral assemblage.

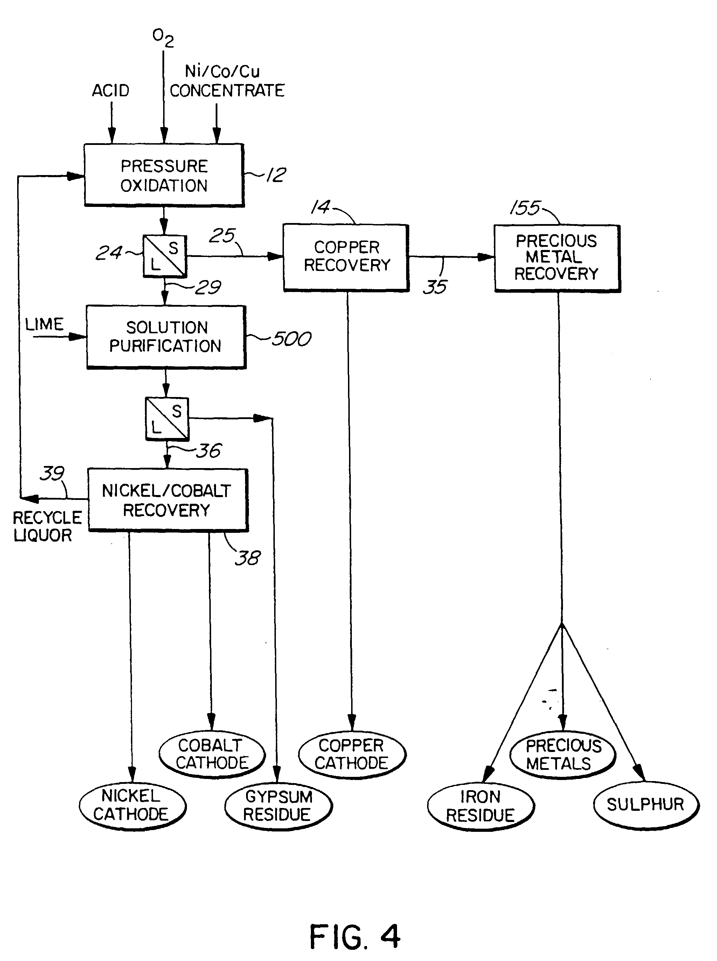

However, for concentrates that have high metal:sulphur ratio and/or low sulphur oxidation, the total amount of acid produced during pressure oxidation 12 is less, and no neutralization 501 may be required to achieve a product slurry with low Fe and Cu in the desired range. This embodiment of the process is termed Mode A and is described below with reference to Figure 4. A typical example of this type of concentrate, is a pentlandite/chalcopyrite/pyrrhotite type of mineral assemblage.

In Mode A, the amount of acid consumed during pressure oxidation by other chemical reactions is more than sufficient to use up all the acid produced by sulphur oxidation.

Examples of both Mode A and Mode C required for two different concentrates are shown in the table below:

| PROCESS TYPE | CONCENTRATE ASSAY% | | | | METAL:SULPHUR RATIO | %SULPHUR OXIDATION |
|---|---|---|---|---|---|---|
| | Cu | Ni | Co | S | | |
| MODE A | 6.3 | 14 | 0.6 | 34 | 0.61 | 6 |
| MODE C | 0.1 | 22 | 0.6 | 29 | 0.78 | 15 |

Thus, the first concentrate with 14% Ni exhibited only 6% S oxidation in pressure oxidation, and thus was treated by Mode A, whereas the second concentrate required Mode C, due to the higher S oxidation (15%).

Process Mode C will now be described with reference to Figure 1.

First the ore or concentrate is subjected to pressure oxidation 12 in an autoclave in the presence of an acidic solution containing sulphate, chloride and copper ions. In the present example the amount of H₂SO₄ introduced into the autoclave is about 40 g/l and the concentration of chloride in solution is about 10-12 g/l. Typically the temperature is about 90°C to about 160°C under an oxygen partial pressure of about 200-2000 kPa. The retention time is about 0.5-5.0 hours, depending inversely on temperature, and the process is normally carried out in a continuous fashion in the autoclave. However, the process can also be carried out in a batchwise fashion, if desired.

The neutralization 501 is effected by pumping slaked lime into the last one or two compartments at the exit side of the autoclave, at about 10-20% solids in water.

After pressure oxidation 12, the slurry produced in the autoclave is discharged through one or more flash tanks 22 to reduce the pressure to atmospheric pressure and the temperature to 90-100°C.

The slurry is then further cooled and subjected to filtration 24 to produce a pressure oxidation filtrate 29 and a solid residue (pressure oxidation filter cake).

The neutralization step 501 is used to precipitate soluble copper into the pressure oxidation filter cake, that would otherwise report to the pressure oxidation filtrate 29. Thus, the neutralization 501 can be used to minimize copper in the filtrate 29, typically down to 1 to 5 g/l copper, which makes the subsequent removal of copper from solution easier. In addition, the neutralization 501 helps to minimize Fe in the pressure oxidation filtrate 29. However, when adding slaked lime it is preferable not to add too much so as to precipitate Ni/Co. Typically, adding slaked lime so that the pressure oxidation filtrate 29 has a pH of between about 3 and 4 has been found suitable for removing most of the copper and yet minimizing Ni/Co precipitation.

The pressure oxidation filtrate 29 is generally subjected to copper solvent extraction 50, particularly if significant copper values are present in the original concentrate, to recover the copper values and to reduce [Cu²⁺] in the raffinate 63 as low as possible, typically less than 100 ppm. In addition, the pressure oxidation filter cake is subjected to an atmospheric leach 14 to recover copper in solution, which solution is subjected to Cu solvent extraction 16. The leach 14 is carried out with raffinate 120 from the Cu solvent extraction 16 which is dilute acid at about 3-20 g/l H₂SO₄. In addition the leach 14 helps wash the entrained solution containing any Ni/Co values out of the pressure oxidation filter cake. These values which will accumulate in stream 51 can be recovered on a bleed basis (say 1 to 10% of flow, depending on concentration) by precipitating at pH 7 to 8 with slaked lime as Ni/Co hydroxides, similar to the conditions in the precipitation 506, described below. The mixed Ni/Co hydroxide can then be filtered off and recycled to a purification stage 500, described below.

The slurry 31 resulting from the leach 14 is difficult to filter and liquid/solid separation is effected by means of a series of thickeners in a counter current decantation (CCD) arrangement 34. Wash water is provided by a portion of the raffinate from the solvent extraction 16, which is split at 36 and neutralized at 46 using limestone to remove acid. The slurry from the neutralization 46 is filtered at 48, to produce a gypsum residue and the liquid 51 is recycled as wash water.

The loaded extractant from the solvent extractions 50 and 16 is subjected to stripping 44 and is then sent to copper electrowinning 20.

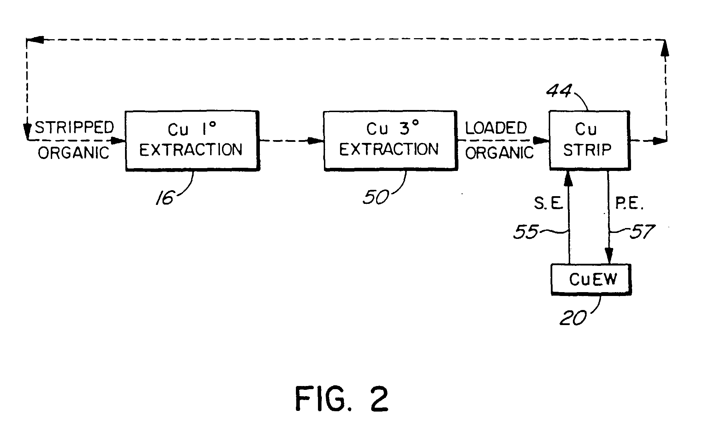

The Cu solvent extractions 50 and 16 are operated with a common extractant. This is shown in Figure 2 where the broken line indicates the organic extractant being circulated after stripping 44. The stripping 44 is effected with spent acid or electrolyte 55 from the electrowinning 20 to obtain a pure copper sulphate solution or pregnant electrolyte 57 which is then passed to the electrowinning stage 20. Any suitable copper extractant capable of selectively removing Cu from an acid solution also containing Ni/Co/Zn/Fe, may be used. An extractant that is found to be suitable is a hydroxy-oxime, such as LIX 84™ or LIX 864™ reagents from Henkel Corporation.

If no significant copper values are present in the ore or concentrate, it is nevertheless beneficial to carry out the pressure oxidation 12 in the presence of copper ions (e.g. 5 to 10 g/l Cu). Copper ions can be added in the form of a copper salt, such as CuSO₄ or CuCl₂. Thereafter, Cu solvent extraction and stripping are still carried out but the electrowinning 20 will be omitted and the pregnant copper liquor resulting from stripping 44 of the organic extractant will be recycled to the pressure oxidation 12. Alternatively, a copper concentrate can be added in which case the copper can be recycled after Cu solvent extraction and stripping or sent to electrowinning for recovery of the copper. This will also be the case if a laterite ore is being processed.

The raffinate 63 is subjected to a purification stage 500, to prepare a solution of Ni/Co free from elements such as Fe, Zn and Cu that cause difficulty in the subsequent process steps of solvent extraction and electrowinning of Ni and Co. The purification stage 500 is a precipitation step in which residual Cu, Fe and Zn are precipitated by the addition of slaked lime and recycled Mg(OH)₂. Typically, the feed solution to the purification stage 500 will contain copper and iron, as well as any zinc and magnesium present in the concentrate. The precipitation 500 is effected at a pH of about 5 to 6 so that, ideally, no more than about 1 ppm Zn, 1 ppm Cu and 1 ppm Fe remain in the solution. It is also important not to precipitate too much Ni/Co. This is achieved by careful control of pH, i.e. not allowing the pH to rise too high. The recycled Mg(OH)₂ has been found to be beneficial in this regard.

The product from the precipitation 500 is subjected to a liquid/solid separation 502. The Cu, Fe and Zn, which precipitate as hydroxides, can be reprocessed by a dilute acid wash or leach 503, particularly for Ni/Co recovery. The product from the acid wash 503 is subjected to a liquid/solid separation 505 leaving principally Cu, Fe and Zn hydroxides, which provides an outlet for zinc from the system. The liquid 504 from the liquid/solid separation 505, is recycled to the pressure oxidation 12.

If the Zn content is sufficiently high, the Cu/Fe/Zn hydroxide can be further leached with dilute acid to selectively recover zinc. In an extreme case, a zinc solvent extraction step can be included, if desired.

The concentrations of Ni, Co and Mg in solution after the precipitation 500 will depend on the composition of the concentrate. Depending on the mineralogy, it is possible that most of the magnesium in the concentrate leaches during the pressure oxidation 12. Thus, for Ni/Co concentrate containing say 20% nickel and 5% magnesium, the typical solution after the precipitation 500 will be about 30 g/l nickel and about 6 g/l magnesium. The magnesium content will be greater in the case of a laterite ore.

The solution resulting from the liquid/solid separation 502, is subjected to a selective precipitation step 506 in which Ni and Co are precipitated as hydroxides or carbonates with a suitable neutralization agent, such as slaked lime (Ca(OH)₂), soda ash (Na₂CO₃), ammonia or caustic soda (NaOH). This is effected at a pH of about 7 to 8, whilst minimizing the precipitation of Mg(OH)₂. A preferred neutralization agent is slaked lime due to its relatively low cost, and because the reaction does not introduce any new cations, such as Na⁺ and NH₄⁺, into the liquor.

### Neutralization with Slaked Lime

${\text{NiSO}}_{\text{4}} {\text{(aq) + Ca(OH)}}_{\text{2}} {\text{→ Ni(OH)}}_{\text{2}} {\text{(s) + CaSO}}_{\text{4}} {\text{.2H}}_{\text{2}} \text{O(s)} \text{(gypsum)}$

A similar reaction occurs with CoSO₄ and MgSO₄, producing Co(OH)₂ and Mg(OH)₂ respectively.

### Neutralization with Caustic Soda) (NaOH)

${\text{NiSO}}_{\text{4}} {\text{(aq) + NaOH → Ni(OH)}}_{\text{2}} {\text{(s) + NaSO}}_{\text{4}} \text{(aq)}$

However, it is important to have some Mg present in the precipitated solid, which facilitates the separation of Ni and Co, as will be described below. A two-stage counter current precipitation sequence has been found beneficial.

In some circumstances, a precipitation with caustic soda or ammonia for instance that does not produce a solid byproduct (gypsum) is advantageous, so that the Ni precipitate is of a higher grade, and free from calcium.

The product from the precipitation step 506 is subjected to a liquid/solid separation 508.

The liquid from the liquid/solid separation 508 is subjected to a precipitation step 510, preferably again with slaked lime, for the same reasons as above, to precipitate additional Mg, if needed, thereby to prevent accumulation of Mg in the system. The product from the precipitation step 510 is subjected to a liquid/solid separation 512. The solid from the separation 512 is a magnesium hydroxide byproduct 514. As indicated above, some of the magnesium hydroxide byproduct 514 is recycled for use in the precipitation 500. The liquid from the separation 512 is recycled to the pressure oxidation 12, as indicated by the recycle stream 516.

The solid hydroxide cake from the separation step 508, containing the Ni and Co values, is subjected to a leach 518 with an ammonium solution at a pH of about 6 to 8.

The ammonium solution may be ammonium sulphate or ammonium carbonate but the former has been found to be superior because it has a lower pH, thus allowing for a better Co to Ni separation in solution. In addition, ammonium sulphate has a lower ammonia (gas) vapour pressure, and as well, the Ni/Co extractions are superior with ammonium sulphate. In the present example a 200 g/l ammonium sulphate solution is used.

The reactions which take place during the leach 518, in which soluble nickel and cobalt diammine sulphates are formed, are as follows: ${\text{(NH}}_{\text{4}} {\text{)}}_{\text{2}} {\text{SO}}_{\text{4}} {\text{+ Ni(OH)}}_{\text{2}} {\text{→ Ni(NH}}_{\text{3}} {\text{)}}_{\text{2}} {\text{SO}}_{\text{4}} {\text{+ 2H}}_{\text{2}} \text{O}$${\text{(NH}}_{\text{4}} {\text{)}}_{\text{2}} {\text{SO}}_{\text{4}} {\text{+ Co(OH)}}_{\text{2}} {\text{→ Co(NH}}_{\text{3}} {\text{)}}_{\text{2}} {\text{SO}}_{\text{4}} {\text{+ 2H}}_{\text{2}} \text{O}$

The Mg present in the solid also dissolves, as follows: ${\text{(NH}}_{\text{4}} {\text{)}}_{\text{2}} {\text{SO}}_{\text{4}} {\text{+ Mg(OH)}}_{\text{2}} {\text{→ MgSO}}_{\text{4}} {\text{→ 2H}}_{\text{2}} {\text{O + 2NH}}_{\text{3}}$

In carrying out the leach 518, it is not attempted to leach out 100% of the Ni/Co values in the solid but only about 90-99%. This enables the leach 518 to be carried out at a low pH rather than a higher pH of about 9 which would otherwise be required. This higher pH requires the addition of ammonia to the leach as a second reagent with the ammonium sulphate.

A further problem which arises is that the known or commercially available Co extractant does not function effectively at this high pH value. The extractant degrades and it is not selective against Ni. As a result, it is necessary to effect Ni extraction first, rather than Co extraction, which would then require reducing the pH by the addition of a further reagent such as acid, which would in turn mean production of byproduct ammonium sulphate and consumption of the reagent ammonia. Another problem that arises is that, in order to effect Ni solvent extraction first, it is necessary first to oxidize all the Co to the + 3 oxidation state to avoid extraction of Co with Ni. This oxidation is difficult to achieve quantitatively. This, therefore, results in further process complications. Also it is necessary to reduce the Co³⁺ back to Co²⁺ following Ni extraction and this is equally difficult to achieve.

To avoid the above difficulties, the process according to the present invention provides effecting the leach 518 at a pH of about 6 to about 8 and then subjecting the resultant solid to a subsequent washing stage 520 with dilute ammonium sulphate solution, as will be described below.

A further aspect of the process is that the concentration of nickel ions in solution during the leach 518 is controlled to remain at a relatively low value of about 10 g/l maximum. It has been found that this results in better Ni recovery during the leach 518. With the amount of Ni present in the solid known, the appropriate volume of liquid required to arrive at the desired Ni concentration can be calculated.

The product from the leach 518 is subjected to liquid/solid separation 522.

The liquid from the separation 522 is subjected to a Co solvent extraction 534 to provide a Co loaded extractant and a raffinate which is then subjected to a Mg solvent extraction 536 to provide a Mg loaded extractant and a raffinate which is subjected to a Ni solvent extraction 538 to provide a Ni loaded extractant and a raffinate.

The raffinate from the Ni solvent extraction 538 is recycled to the leach 518.

The solid product from the liquid/solid separation 522 is subjected to the repulp or washing step 520 as indicated above where the solid is washed with ammonium sulphate solution. This is a weak ammonium sulphate solution of about 10% the concentration of the solution of the leach 518. It results from the washing of entrained ammonium sulphate solution from the solid in the washing step 520.

The product from the repulp step 520 is subjected to a liquid/solid separation 524 and the solid is washed with water. The wash water and liquid from the liquid/solid separation 524 is subjected to a Co solvent extraction 526 to again provide a Co loaded extractant and a raffinate which is subjected to Mg solvent extraction 527 to provide a Mg loaded extractant and a raffinate which is subjected to a Ni solvent extraction 528 to provide a Ni loaded extractant and a final raffinate which is recycled to the repulp step 520.

To compensate for the water added during the water wash at the separation 524, there is a bleed of the final raffinate to the strong ammonium sulphate raffinate coming from the Ni solvent extraction 538. For this purpose, the strong ammonium sulphate circuit includes an evaporation step 539 to compensate for the raffinate bleed from the weak ammonium sulphate raffinate.

The Co solvent extractions 534, 526, the Mg solvent extractions 536, 527 and the Ni solvent extractions 538, 528, respectively, are all operated with a common extractant, as is the case with the Cu solvent extractions 50, 16.

An extractant which has been found to be suitable for both Co and Mg extraction is an organic phosphorous acid extractant, more specifically an organic phosphinic acid based extractant, such as Cyanex 272 ™, of Cyanamid Inc., which comprises bis 2,4,4- trimethylpentyl phosphinic acid. For the Ni extraction, a hydroxy-oxime based extractant, such as LIX 84 ™, of by Henkel Corp, has been found to be suitable.

The respective Co, Ni and Mg loaded extractants are scrubbed with suitable aqueous solutions to remove entrained ammonium sulphate solution and then stripped with dilute acid to produce pure pregnant solutions of Co and Ni and a Mg pregnant liquor containing small amounts of Co and Ni. The Co and Ni solutions are sent to the Co and Ni electrowinning stages 530 and 532, respectively.

Prior to stripping, the Co loaded extractant is scrubbed with a Co concentrate solution which is split off from the Co pregnant solution going to Co electrowinning and/or a Mg concentrate solution which is split from the Mg pregnant liquor. This is to facilitate the removal of Ni values which may be present in the Co loaded extractant. Likewise, the Mg loaded extractant can be scrubbed with a Mg concentrate solution which is split off from the Mg pregnant liquor.

For good separation of Co from Ni during Co solvent extraction and Ni solvent extraction, it has been found beneficial to have some Mg present in the solution feed to the Co solvent extraction. Typically, solution analysis has the same ratio of Co to Ni as found in the original feed concentrate (commonly 1:30). Thus for 10 g/l Ni, 0.33 g/l Co is typical.

The same extractant is used for both the Co and Mg solvent extractions 534 and 536. The extractant is more selective for Co than for Mg, and more selective for Mg than for Ni. During the Co solvent extraction 534, the amount of extractant used is limited to occupy all the available sites with Co ions, to a major extent, and with Mg ions, to a lesser extent, which counteracts the extraction of Ni. During the Mg solvent extraction 536, the available sites are filled with mainly Mg ions and, to a lesser extent, with some Co ions and possibly also a small amount of Ni ions. The Ni and Co ions are then recovered by the recycle of the Mg pregnant liquor to the Ni/Co precipitation 506, as indicated by the arrow 543.

It has further been found beneficial to maintain a Mg concentration about equal to the Co concentration, although this may vary quite widely from say 1:5 to 5:1.

The benefit of having Mg present is that:
(i) it minimizes the amount of Ni that is extracted during Co solvent extraction, whilst allowing
(ii) high Co percent extraction, i.e., greater than 90%, and
(iii) a high Co to Ni ratio in the Co product, i.e., Co : Ni > 1000:1.

Without Mg present, some compromise must be reached in the Co solvent extraction, whereby
(i) some Ni is co-extracted with Co, or
(ii) the Co extraction is incomplete, or
(iii) the Co to Ni ratio in the Co product is too low.

With Mg present, some Co (i.e. 5-10%) can be left un-extracted during Co solvent extraction and instead will be extracted during Mg solvent extraction. The products of Mg solvent extraction are:
(a) Pregnant liquor from stripping containing some Mg, Ni and Co, which is recycled and not lost; and
(b) Mg raffinate with very low Co levels, i.e. about 1 ppm, which allows the subsequent Ni solvent extraction to produce a very good Ni to Co ratio in the Ni pregnant liquor going to Ni electrowinning. Thus, very pure Ni cathodes and Co cathodes result.

The solid from the liquid/solid separation 524 is washed (540) with dilute acid to recover entrained Ni/Co which is recycled to the precipitation 500. The solid residue after the liquid/solid separation 542 is discarded.

A suitable temperature range for the Ni/Co leach 518 and Ni/Co solvent extractions has been found to be about 30°C to 60°C, preferably about 40°C to about 50°C.

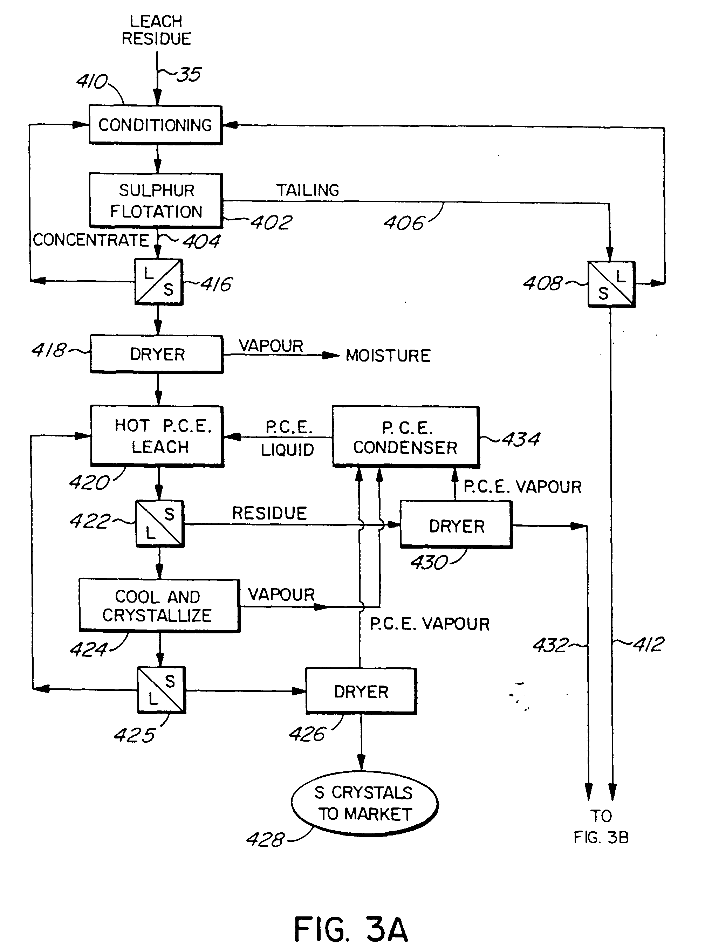

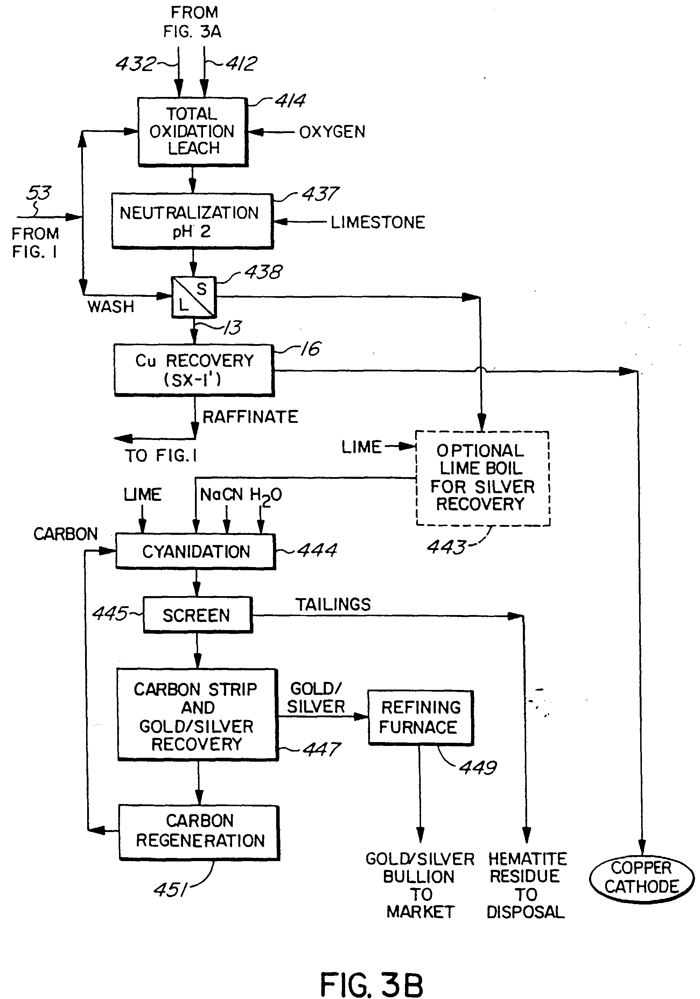

Turning now to Figures 3A and B, the recovery of precious metals, such as gold and silver, will be described. This process involves the treatment of the final residue stream 35 in Figure 1.

The precious metals are not leached during the pressure oxidation stage 12 but remain in the solid residue 35 remaining after the atmospheric leaching stage 14.

In order to facilitate precious metal recovery, the flash down 22 from the pressure oxidation stage 12 is carried out in two stages. The first stage is at a temperature slightly above the freezing point of elemental sulphur, i.e. about 120° to 130°C with a corresponding steam pressure of about 50-150 kPa. The process is preferably carried out in a continuous mode, the retention time at the first flash let-down stage being about 10 to 30 minutes.

The second flash let-down stage is at atmospheric pressure and about 90 to 100°C with a retention time of again at least 10 minutes. This allows the elemental sulphur, which is still molten in the first flash-down stage, to convert to one of the solid phases, such as the stable orthorombic crystalline phase. This procedure facilitates the production of clean crystals of elemental sulphur, which is important to the recovery of the precious metals from the leach residue.

The leach residue 35 now produced by the atmospheric leaching stage 14 contains, in addition to the precious metals, hematite, crystalline elemental sulphur, unreacted sulphides (pyrite) and any additional products that may result from the particular concentrate being used, e.g. gypsum and iron hydroxides.

Gold in the residue 35 is believed to be largely untouched by the process so far and most likely is in the native state. Silver, however, is oxidized in the pressure oxidation stage 12 and is probably present as a silver salt, such as silver chloride or silver sulphate.

It has been found that conventional cyanidation does not leach gold well from the residue 35. It is believed that this is due to the encapsulation of the gold in mineral particles, such as pyrite. The gold can however be liberated by the pressure oxidation of these minerals, referred to as "total oxidative leaching". In order to effect such leaching without oxidizing elemental sulphur also contained in the residue 35, the process comprises the step of removing as much of the elemental sulphur as possible.

Firstly, by virtue of the two stage flash-down, good quality sulphur crystals are produced. Secondly, the leach residue 35 is subjected to froth flotation 402 to produce a sulphur rich flotation concentrate 404 and a sulphur depleted flotation tail 406. The tail 406 is subjected to a solid/liquid separation 408 to produce a liquid which is recirculated to a conditioning tank 410 upstream of the flotation step 402 and a solid 412 which is sent to the total oxidative leaching stage 414.

The flotation concentrate 404 is filtered (416), and dried to a low moisture in a dryer 418. The product is then subjected to a sulphur leaching step 420 with a sulphur extractant. Any suitable sulphur extractant such as perchloroethylene (PCE) or kerosene may be used. In the present example hot PCE is used. The slurry from the leach 420 is filtered 422 and the resulting liquid is subjected to cooling 424 to produce crystalline S° and then filtered (425). The cooled sulphur can be subjected to an optional sulphur purification step (not shown) to remove impurities, such as selenium and tellurium, therefrom. The solid sulphur is dried in a dryer 426 to produce a sulphur product 428. The liquid from the filtration 425 is recycled to the hot PCE leach 420.

The solid residue from the filtration 422 is dried in a dryer 430. The resulting product, which is a low sulphur residue 432, is sent to the total oxidative leach 414.

The PCE vapours from the cooling 424 and the dryers 426 and 430 are recycled to the hot PCE leach 420 via a condenser 434.

A test was carried out in which 100g of residue from the atmospheric leach 14 containing 25.1% elemental sulphur (S°) and 3% sulphide was processed through flotation 402 and leaching 420. This produced 73.8g of desulphurized residue (feed material for the total oxidation leach 414) containing 1.9% S° and 4.1% sulphide, i.e. a total of 6% total sulphur.

The desulphurized residue contained 5.9% of the elemental sulphur (S°) in the original leach residue, i.e. 94.1% was recovered to a pure elemental sulphur product.

The total oxidative leach 414 is carried out at about 200°C-220°C and 200-2000 kPa oxygen partial pressure, sufficient to fully oxidize all sulphur and metal compounds to the highest valences, respectively. Thus all sulphur and pyrite are oxidized to sulphate. The oxidation is conducted in acidic conditions, such as with the acid being produced in situ. If sufficient pyrite is present, the reaction is highly exothermic and generally the desired operating temperature can be achieved. Typically about 10% of total oxidizable sulphur will be sufficient with normal percentage solids in the feed slurry.

After the total oxidative leaching 414, the slurry is subjected to neutralization 437 at pH 2-3 with limestone and then subjected to a liquid/solid separation 438 by means of a counter current decantation (CCD) circuit, to obtain a solid containing precious metals and a liquid 13 which may contain base metal values, such as copper. The liquid 13 can be combined with the liquid (stream 33) going to the solvent extraction 16 for the recovery of copper, as indicated in Figure 1.

A portion of the neutralized stream 51 (Figure 1) of the raffinate from the Cu solvent extraction 16 is split off at 49 and the resulting stream 53 is partly used (about 80%) as wash water in the liquid/solid separation 438 and partly recycled (about 20%) to the total oxidative leach 414, as indicated in Figure 3B. The precious metals recovery circuit of Figures 3A and B is indicated by the block 155 in Figure 1.

Prior to the cyanidation 444, the solids from the separation 438 can be subjected to an optional slaked lime boil step 443 to facilitate the recovery of silver during the cyanidation 444 by the decomposition of silver jarosite compounds formed during the total oxidative leach 414.

The precious metals are in the solids remaining after the separation 438. Now that pyrite and other encapsulating minerals in the original concentrate have been decomposed, the precious metals are amenable to cyanidation 444.

In the cyanidation step 444, the solids are leached with NaCN under alkaline conditions. In order to effect this, the solids are slurried up with cyanide solution to form a 30-40% solids slurry. Additional NaCN and slaked lime are added as required to maintain a minimum NaCN concentration of about 0.2 to about 0.5 g/l NaCN, with a pH of about 10. The temperature is ambient and usually about 4 to 8 hours retention time is required in continuous mode of operation.

Both gold and silver report in high yield to the cyanide solution, and are recovered typically by the established process of carbon-in-pulp circuit, whereby activated carbon is added to the cyanide slurry to absorb the precious metals, without the necessity of filtration. The loaded carbon, now rich in precious metals is separated by screening (445) and the barren pulp discarded to tailing.

The loaded carbon is treated by established methods to recover the precious metals content by a leach/electrowin/smelt process (447). The product is generally Dore metal containing both gold and silver, which is sent to a gold refinery 449 for final separation of gold from silver. Barren carbon from a carbon regeneration step 451 after the precious metals recovery, is recycled to the carbon-in-pulp circuit 444.

The overall recovery of precious metals by the total process is generally well over 90%, and under optimum conditions approach 99%.

A test was carried out in which desulphurized residue was processed in a total oxidative leach 414 at 220°C for 2 hours under oxygen pressure and then depressurized and cooled to room temperature. The resultant slurry was neutralized to pH 3 with limestone and then filtered. The filtered cake was then leached with cyanide solution under standard conditions to leach gold and silver.

The gold extraction after the total oxidative leach 414 and cyanidation 444 was 97% with only 1.0 kg/t NaCN consumption. In comparison, the gold extraction on a residue that had not been oxidized in the total oxidative leach 414 was only 34% and cyanide consumption was extremely high at 19.0 kg NaCN/t.

Figure 4 is a flow diagram of Mode A. Steps which correspond with those of the embodiment of Figure 1 are given the same reference numerals.

The process comprises a pressure oxidation stage 12 in which sulphide minerals in the concentrate or ore are oxidized by high pressure oxygen, followed by a liquid/solid separation (e.g. filtration) 24, producing a solid (pressure oxidation filter cake) 25 and pressure oxidation filtrate 29.

The solid 25 contains all or almost of the copper content of the feed concentrate, and is treated for copper recovery 14 by acid leaching, solvent extraction and electrowinning as in the embodiment of Figure 1, thus producing high quality copper cathodes, and a residue 35 which may contain precious metals. The residue 35 can be treated for precious metal recovery, as described with reference to Figures 3A and B above. This is indicated by the block 155 in Figure 4.

The filtrate 29 is purified at 500 to remove deleterious elements such as Cu, Fe and Zn, by neutralization with slaked lime to about pH 6, as described with reference to Figure 1, producing a purified solution 36, after filtration, containing Ni, Co and certain other elements such as Mg which may be present in the feed concentrate.

The solution 36 is treated for Ni/Co recovery as described with reference to Figure 1. This is indicated by the block 38 in Figure 4. The solution 39 produced in 38 is recycled back to the pressure oxidation 12, to complete the cycle, as before (stream 516 in Figure 1).

While only preferred embodiments of the invention have been described herein in detail, the invention is not limited thereby and modifications can be made within the scope of the attached claims.

## Claims

1. A process for the extraction of Ni/Co values from an ore or concentrate, comprising the steps of:
subjecting the ore or concentrate to pressure oxidation in the presence of oxygen and an acidic solution containing halide, copper and sulphate ions to obtain a liquor containing Ni/Co values from the resultant pressure oxidation slurry;
subjecting the liquor to a selective precipitation treatment to obtain a solid containing Ni/Co hydroxide; and
subjecting the solid to a Ni/Co leaching stage with an ammonium solution to produce a leach solution containing Ni/Co values and a residue.

2. A process according to claim 1, further comprising the steps of:
subjecting the residue to an acidic washing stage to produce a wash solution containing Ni/Co values and a discardable residue; and
recycling the wash solution to the selective precipitation treatment.

3. A process according to claim 1, further comprising the steps of:
subjecting the residue to an acidic washing stage to produce a wash solution containing Ni/Co values and a discardable residue; and
treating the wash solution for the recovery of the Ni/Co values therefrom.

4. A process according to any one of the preceding claims, wherein the selective precipitation treatment comprises the steps of:
subjecting the liquor to a precipitation stage at a pH of about 5 to 6 to precipitate iron, copper or zinc present in the liquor; and
subjecting the resultant solution to a precipitation stage at a pH of about 7 to 8 to obtain the solid containing Ni/Co hydroxide.

5. A process according to any one of the preceding claims, wherein the liquor containing the Ni/Co values is obtained by subjecting the pressure oxidation slurry to neutralization at a predetermined pH at which copper, iron or zinc present in the slurry is in solid form and the Ni/Co values are in solution.

6. A process according to any one of claims 1 to 4, wherein the liquor containing the Ni/Co values is obtained by subjecting the pressure oxidation slurry to neutralization at a predetermined pH at which the Ni/Co values are in solid form and subjecting the solid Ni/Co values to an acid leach to obtain the Ni/Co values in solution.

7. A process according to claim 2 or 3, further comprising the step of subjecting the residue to a washing stage prior to the acidic washing stage to produce a second wash solution containing Ni/Co values and a residue which is subjected to the acidic washing stage.

8. A process according to claim 7, further comprising the step of subjecting one or both of the leach solution and the further wash solution containing Ni/Co values to solvent extraction to recover Ni/Co values therefrom.

9. A process according to claim 8, wherein the solvent extraction is effected with a nickel extractant to produce a nickel containing solution.

10. A process according to claim 8, wherein the solvent extraction is effected with a cobalt extractant to produce a cobalt containing solution.

11. A process according to claim 8, wherein the solvent extraction comprises the steps of:
effecting a cobalt solvent extraction in the presence of magnesium ions using a cobalt extractant to produce a cobalt extractant loaded with cobalt ions and a first raffinate containing nickel and magnesium ions in solution;
effecting a magnesium solvent extraction on the first raffinate using a magnesium extractant to produce a magnesium extractant loaded with magnesium and cobalt ions and a second raffinate; and
effecting a nickel solvent extraction on the second raffinate using a nickel extractant to produce a nickel loaded extractant and a third raffinate.

12. A process according to claim 11, wherein each of the leach solution and the further wash solution is subjected to the solvent extraction, the third raffinate from the solvent extraction of the leach solution being recycled to the Ni/Co leaching stage and the third raffinate from the solvent extraction of further wash solution being recycled to the washing stage prior to the acidic washing stage.

13. A process according to claim 12, wherein the respective Co, Mg and Ni solvent extractions are effected with common Co, Mg and Ni extractants.

14. A process according to claim 11, further comprising the step of stripping the cobalt and nickel loaded extractants to produce cobalt and nickel solutions, respectively.

15. A process according to claim 14, wherein, prior to the stripping, the cobalt loaded extractant is scrubbed with a cobalt concentrate solution which is recycled from the stripping.

16. A process according to claim 11, wherein the Ni/Co leaching stage and the cobalt, magnesium and nickel solvent extractions are carried out at a temperature of about 30°C to about 60°C.

17. A process according to claim 16, wherein the Ni/Co leaching and cobalt, magnesium and nickel solvent extractions are carried out at a temperature of about 45°C to about 50°C.

18. A process according to claim 4, further comprising the step of subjecting the cobalt and nickel solutions to electrowinning to recover cobalt and nickel therefrom.

19. A process according to claim 11, further comprising the step of:
stripping the magnesium extractant to produce a pregnant solution containing magnesium and cobalt ions; and
recycling the pregnant solution to the selective precipitation treatment.

20. A process according to claim 19, wherein prior to stripping the magnesium extractant, it is scrubbed with a magnesium concentrate solution which comprises pregnant solution which is recycled from the stripping of the magnesium extractant.

21. A process according to claim 11, wherein the cobalt extractant is similar to the magnesium extractant, the extractant being more selective for cobalt than for magnesium.

22. A process according to claim 8, wherein the solvent extraction comprises the steps of:
effecting a cobalt solvent extraction at a pH of about 6 to 8 to produce a cobalt solution and a first raffinate; and
effecting a nickel solvent extraction on the first raffinate at substantially the same pH as the cobalt solvent extraction to produce a nickel solution and a second raffinate.

23. A process according to any one of the preceding claims, further comprising the step of controlling the concentration of nickel in the leach solution to a maximum value of about 3 to 25 g/l.

24. A process according to claim 23, wherein the maximum value is from about 8 to 15 g/l.

25. A process according to claim 24, wherein the maximum value is about 10 g/l.

26. A process according to any one of the preceding claims, wherein the selective precipitation treatment is effected in the presence of magnesium ions to produce a solid containing magnesium in addition to the Ni/Co hydroxide and a resulting solution containing magnesium.

27. A process according to claim 26, further comprising the step of subjecting the resulting solution to a precipitation stage to produce a magnesium hydroxide precipitate and a magnesium depleted raffinate.

28. A process according to claim 27, further comprising the step of recycling the magnesium depleted raffinate to the pressure oxidation.

29. A process according to claim 27 or 28, further comprising the step of recycling at least part of the magnesium precipitate to the selective precipitation treatment.

30. A process according to any one of the preceding claims, wherein the Ni/Co leaching stage is effected with an ammonium sulphate solution.

31. A process according to claim 30, wherein the ammonium sulphate solution has a concentration of from about 150 to 250 g/l.

32. A process according to claim 31, wherein the ammonium sulphate solution has a concentration of about 200 g/l.

33. A process according to any one of claims 1 to 29, wherein the Ni/Co leaching stage is effected with an ammonium carbonate solution.

34. A process according to any one of claims 1 to 29, wherein the Ni/Co leaching stage is effected with a mixture of ammonium sulphate and ammonium carbonate in solution.

35. A process according to any one of the preceding claims, wherein a copper salt or concentrate is added to the acidic solution in the pressure oxidation to provide the copper in the acidic solution.

36. A process according to claim 35, wherein the copper is recycled to the pressure oxidation.

37. A process according to any one of the preceding claims including the step of subjecting the liquor from the pressure oxidation to copper solvent extraction prior to the selective precipitation treatment.

38. A process according to claim 1, wherein the halide is chloride.

39. A process according to any one of claims 1 to 34 or claim 38, wherein the ore or concentrate comprises a sulphide concentrate which also contains copper values and further comprising the steps of leaching the pressure oxidation slurry or solid obtained therefrom with an acidic sulphate solution to produce a leach liquor containing copper sulphate in solution and a leach residue;
subjecting the leach liquor to copper solvent extraction to produce copper concentrate solution and a copper depleted raffinate; and
recycling at least part of the copper depleted raffinate to the acidic sulphate leaching step.

40. A process according to claim 39, further comprising the step of subjecting the liquor to copper solvent extraction prior to the selective precipitation treatment to produce a further copper concentrate solution.

41. A process according to claim 40, further comprising the step of subjecting the copper concentrate solutions from the copper solvent extractions to electrowinning to produce copper metal.

42. A process according to any one of the preceding claims, wherein the ore or concentrate comprises a sulphide concentrate which also contains precious metals, and further comprising the steps of:
removing elemental sulphur from the pressure oxidation slurry or a solid obtained therefrom to obtain a low sulphur residue; and
subjecting the low sulphur residue to an oxidative leach at elevated temperature and pressure to oxidize sulphur and precious metal compounds present in the low sulphur residue to produce a residue for the extraction of the precious metals therefrom.

43. A process according to claim 42, wherein the sulphur removal comprises the steps of:
subjecting the pressure oxidation slurry or solid obtained therefrom to froth flotation to produce a sulphur rich flotation concentrate and a sulphur depleted flotation tail; and
subjecting the solid residue to sulphur extraction with a suitable extractant to produce the low sulphur residue.

44. A process according to claim 43, wherein the sulphur depleted flotation tail is subjected to a solid/liquid separation to produce a liquid which is recirculated to the froth flotation and a solid which is subjected to the oxidative leach.

45. A process according to claim 43 or claim 44, wherein the sulphur extraction is effected at a temperature of about 90°-150°C.

46. A process according to claim 45, wherein the sulphur extractant is selected from the group consisting of kerosene and perchloroethylene.

47. A process according to claim 46, wherein the oxidative leach is carried out at a temperature of about 200°-220°C and an oxygen partial pressure of about 500-1200 kPa under acidic conditions.

## Patentansprüche

1. Verfahren zur Extraktion nutzbarer Ni/Co-Anteile aus einem Erz oder Konzentrat in folgenden Stufen:
Druckoxidation des Erzes oder Konzentrats in Gegenwart von Sauerstoff und einer sauren Halogenid-, Kupfer- und Sulfationen enthaltenden Lösung zur Gewinnung einer nutzbare Ni/Co-Anteile enthaltenden Flüssigkeit aus der erhaltenen Druckoxidationsaufschlämmung;
selektive Fällungsbehandlung der Flüssigkeit zur Gewinnung eines Ni/Co-Hydroxid enthaltenden Feststoffs und Auslaugung von Ni/Co aus dem Feststoff mit einer Ammoniumlösung zur Gewinnung einer nutzbare Ni/Co-Anteile und einen Rückstand enthaltenden Auslauglösung.

2. Verfahren nach Anspruch 1, bei welchem zusätzlich der Rückstand einer sauren Wäsche zur Gewinnung einer nutzbare Ni/Co-Anteile und einen verwerfbaren Rückstand enthaltenden Waschlösung unterworfen und
die Waschlösung in die selektive Fällungsbehandlung rückgeführt werden.

3. Verfahren nach Anspruch 1, bei welchem zusätzlich der Rückstand einer sauren Wäsche zur Gewinnung einer nutzbaren Ni/Co-Anteile und einen verwerfbaren Rückstand enthaltenden Waschlösung unterworfen und
die Waschlösung unter Rückgewinnung der nutzbaren Ni/Co-Anteile (aus dieser) behandelt werden.

4. Verfahren nach einem der vorhergehenden Ansprüche, bei welchem die selektive Fällungsbehandlung folgende Stufen umfaßt:
Durchführung einer Fällung in der Flüssigkeit bei einem pH-Wert von etwa 5 bis 6 zur Ausfällung von in der Flüssigkeit vorhandenem Eisen, Kupfer oder Zink und
Durchführung einer Fällung in der erhaltenen Lösung bei einem pH-Wert von etwa 7 bis 8 zur Gewinnung des Ni/Co-Hydroxid enthaltenden Feststoffs.

5. Verfahren nach einem der vorhergehenden Ansprüche, wobei die benutzbaren Ni/Co-Anteile enthaltende Flüssigkeit erhalten wird, indem man die Druckoxidationsaufschlämmung auf einen gegebenen pH-Wert, bei welchem in der Aufschlämmung vorhandenes Kupfer, Eisen oder Zink in fester Form vorliegen und die nutzbaren Ni/Co-Anteile sich in Lösung befinden, neutralisiert.

6. Verfahren nach einem der Ansprüche 1 bis 4, wobei die benutzbaren Ni/Co-Anteile enthaltende Flüssigkeit erhalten wird, indem an die Druckoxidationsaufschlämmung auf einen gegebenen pH-Wert, bei dem die nutzbaren Ni/Co-Anteile in fester Form vorliegen, neutralisiert und die festen nutzbaren Ni/Co-Anteile einer Säureauslaugung unterwirft, um die nutzbaren Ni/Co-Anteile in Lösung zu erhalten.

7. Verfahren nach Anspruch 2 oder 3, bei welchem zusätzlich der Rückstand vor der Säurewäsche gewaschen wird, um eine zweite, die nutzbaren Ni/Co-Anteile enthaltende zweite Waschlösung und einen der Säurewäsche zu unterwerfenden Rückstand zu gewinnen.

8. Verfahren nach Anspruch 7, bei welchem zusätzlich die Auslauglösung und/oder die weitere Waschlösung mit nutzbaren Ni/Co-Anteilen einer Lösungsmittelextraktion unterwirft, um daraus nutzbare Ni/Co-Anteile zu gewinnen.

9. Verfahren nach Anspruch 8, wobei die Lösungsmittelextraktion mit einem Nickelextraktionsmittel zur Gewinnung einer nickelhaltigen Lösung durchgeführt wird.

10. Verfahren nach Anspruch 8, wobei die Lösungsmittelextraktion mit einem Kobaltextraktionsmittel zur Gewinnung einer kobalthaltigen Lösung durchgeführt wird.

11. Verfahren nach Anspruch 8, wobei die Lösungsmittelextraktion folgende Stufen umfaßt:
Durchführung einer Kobaltlösungsmittelextraktion in Gegenwart von Magnesiumionen unter Verwendung eines Kobaltextraktionsmittels zur Gewinnung eines mit Kobaltionen gepackten Kobaltextraktionsmittels und eines ersten Nickel- und Magnesiumionen in Lösung enthaltenden Raffinats;
Durchführung einer Magnesiumlösungsmittelextraktion beim ersten Raffinat zur Gewinnung eines mit Magnesium- und Kobaltionen bepackten Magnesiumextraktionsmittels und eines zweiten Raffinats, und
Durchführung einer Nickellösungsmittelextraktion bei dem zweiten Raffinat unter Verwendung eines Nickelextraktionsmittels zur Gewinnung eines mit Nickel bepackten Extraktionsmittels und eines dritten Raffinats.

12. Verfahren nach Anspruch 11, wobei sowohl die Auslauglösung als auch die weitere Waschlösung einer Lösungsmittelextraktion unterworfen werden und das dritte Raffinat aus der Lösungsmittelextraktion der Auslauglösung in die Ni/Co-Auslaugstufe und das dritte Raffinat aus der Lösungsmittelextraktion der weiteren Waschlösung in die Waschstufe vor der Säurewäsche rückgeführt werden.

13. Verfahren nach Anspruch 12, wobei die jeweiligen Co-, Mg- und Ni-Lösungsmittelextraktionen mit gemeinsamen Co-, Mg- und Ni-Extraktionsmitteln durchgeführt werden.

14. Verfahren nach Anspruch 11, bei welchem zusätzlich die mit Kobalt und Nickel bepackten Extraktionsmittel abgestreift werden, um kobalt- bzw. nickelhaltige Lösungen zu gewinnen.

15. Verfahren nach Anspruch 14, wobei vor dem Abstreifen das mit Kobalt bepackte Extraktionsmittel mit einer aus der Abstreifstufe rückgeführten Kobaltkonzentratlösung gewaschen wird.

16. Verfahren nach Anspruch 11, wobei die Ni/Co-Auslaugstufe und die Kobalt-, Magnesium- und Nickellösungsmittelextraktionen bei einer Temperatur von etwa 30 °C bis etwa 60 °C durchgeführt werden.

17. Verfahren nach Anspruch 16, wobei die Ni/Co-Auslaugung und die Kobalt-, Magnesium- und Nickellösungsmittelextraktionen bei einer Temperatur von etwa 45 °C bis etwa 50 °C durchgeführt werden.

18. Verfahren nach Anspruch 4, bei welchem zusätzlich die Kobalt- und Nickel lösung zur Gewinnung von Kobalt und Nickel (aus diesen) elektrolytisch extrahiert werden.

19. Verfahren nach Anspruch 11, bei welchem zusätzlich das Magnesiumextraktionsmittel zur Gewinnung einer an Magnesium- und Kobaltionen reichen Lösung abgestreift und die (an den genannten Ionen) reiche Lösung in die selektive Fällungsbehandlung rückgeführt werden.

20. Verfahren nach Anspruch 19, wobei vor dem Abstreifen des Magnesiumextraktionsmittels dieses mit einer Magnesiumkonzentratlösung in Form der aus der Abstreifbehandlung des Magnesiumextraktionsmittels rückgeführten reichen bzw. angereicherten Lösung gewaschen wird.

21. Verfahren nach Anspruch 11, wobei das Kobaltextraktionsmittel dem Magnesiumextraktionsmittel ähnlich, jedoch für Kobalt stärker selektiv als für Magnesium ist.

22. Verfahren nach Anspruch 8 wobei die Lösungsmittelextraktion folgende Stufen umfaßt:
Durchführung einer Kobaltlösungsmittelextraktion bei einem pH-Wert von etwa 6 bis 8 zur Gewinnung einer Kobaltlösung und eines ersten Raffinats, und
Durchführung einer Nickellösungsmittelextraktion bei dem ersten Raffinat bei praktisch demselben pH-Wert wie bei der Kobaltlösungsmittelextraktion zur Gewinnung einer Nickellösung eines eines zweiten Raffinats.

23. Verfahren nach einem der vorhergehenden Ansprüche, bei welchem zusätzlich die Nickelkonzentration in der Auslauglösung auf einen Maximalwert von etwa 3 - 25 g/l eingestellt wird.

24. Verfahren nach Anspruch 23, wobei der Maximalwert etwa 8 - 15 g/l beträgt.

25. Verfahren nach Anspruch 24, wobei der Maximalwert etwa 10 g/l beträgt.

26. Verfahren nach einem der vorhergehenden Ansprüche, wobei die selektive Fällungsbehandlung in Gegenwart von Magnesiumionen zur Gewinnung eines neben dem Ni/Co-Hydroxid auch noch Magnesium enthaltenden Feststoffs und einer resultierenden, magnesiumhaltigen Lösung durchgeführt wird.

27. Verfahren nach Anspruch 26, bei welchem zusätzlich die resultierende Lösung einer Fällungsbehandlung unterworfen wird, um einen Magnesiumhydroxidniederschlag und ein an Magnesium verarmtes Raffinat zu gewinnen.

28. Verfahren nach Anspruch 27, bei welchem zusätzlich das an Magnesium verarmte Raffinat in die Druckoxidation rückgeführt wird.

29. Verfahren nach Anspruch 27 oder 28, bei welchem zusätzlich zumindest ein Teil des Magnesiumniederschlags in die selektive Fällungsbehandlung rückgeführt wird.

30. Verfahren nach einem der vorhergehenden Ansprüche, bei welchem die Ni/Co-Auslaugung mittels einer Ammoniumsulfatlösung erfolgt.

31. Verfahren nach Anspruch 30, wobei die Ammoniumsulfatlösung eine Konzentration von etwa 150 - 250 g/l aufweist.

32. Verfahren nach Anspruch 31, wobei die Ammoniumsulfatlösung eine Konzentration von etwa 200 g/l aufweist.

33. Verfahren nach einem der Ansprüche 1 bis 29, wobei die Ni/Co-Auslaugung mit einer Ammoniumcarbonatlösung erfolgt.

34. Verfahren nach einem der Ansprüche 1 bis 29, wobei die Ni/Co-Auslaugung mit einem Gemisch von Ammoniumsulfat und Ammoniumcarbonat in Lösung erfolgt.

35. Verfahren nach einem der vorhergehenden Ansprüche, wobei der sauren Lösung bei der Druckoxidation Kupfersalz oder -konzentrat zugegeben wird, um für Kupfer in der sauren Lösung zu sorgen.

36. Verfahren nach Anspruch 35, wobei das Kupfer in die Druckoxidation rückgeführt wird.

37. Verfahren nach einem der vorhergehenden Ansprüche, bei welchem die Flüssigkeit aus der Druckoxidation vor der selektiven Fällungsbehandlung einer Kupferlösungsmittelextraktion unterworfen wird.

38. Verfahren nach Anspruch 1, wobei das Halogenid aus Chlorid besteht.

39. Verfahren nach einem der Ansprüche 1 bis 34 oder 38, wobei das Erz oder Konzentrat ein Sulfidkonzentrat umfaßt, welches ferner nutzbare Kupferanteile enthält, und wobei ferner die Druckoxidationsaufschlämmung oder der daraus gewonnene Feststoff mit einer sauren Sulfatlösung ausgelaugt wird, um eine Auslaugflüssigkeit mit Kupfersulfat in Lösung und einen Auslaugrückstand zu gewinnen;
die Auslaugflüssigkeit einer Kupferlösungsmittelextraktion unterworfen wird, um eine Kupferkonzentratlösung und ein an Kupfer verarmtes Raffinat zu gewinnen, und
mindestens ein Teil des an Kupfer verarmten Raffinats in die saure Sulfatauslaugstufe rückgeführt wird.

40. Verfahren nach Anspruch 39, bei welchem zusätzlich die Flüssigkeit vor der selektiven Fällungsbehandlung einer Kupferlösungsmittelextraktion unterworfen wird, um eine weitere Kupferkonzentratlösung zu gewinnen.

41. Verfahren nach Anspruch 40, bei welchem zusätzlich Kupferkonzentratlösungen aus den Kupferlösungsmittelextraktionen zur Gewinnung von metallischem Kupfer elektrolytisch extrahiert werden.

42. Verfahren nach einem der vorhergehenden Ansprüche, wobei das Erz oder Konzentrat ein auch Edelmetalle enthaltendes Sulfitkonzentrat umfaßt und welches ferner folgende Stufen einschließt:
Entfernung von elementarem Schwefel aus der Druckoxidationsaufschlämmung oder einem daraus gewonnenen Feststoff zur Gewinnung eines Rückstands niedrigen Schwefelgehalts, und oxidative Auslaugung des Rückstands mit niedrigem Schwefelgehalt bei erhöhter Temperatur und erhöhtem Druck zur Oxidation des in dem Rückstand niedrigen Schwefelgehalts enthaltenen Schwefels und der darin enthaltenen Edelmetallverbindungen unter Gewinnung eines Rückstands zur Extraktion der Edelmetalle aus diesem.

43. Verfahren nach Anspruch 42, bei welchem die Schwefelentfernung folgende Stufen umfaßt:
Schaumflotation der Druckoxidationsaufschlämmung oder des daraus gewonnen Feststoffs zur Gewinnung eines an Schwefel angereicherten Flotationskonzentrats und eines an Schwefel verarmten Flotationsschwanzes, und
Schwefelextraktion aus dem festen Rückstand mit einem geeigneten Extraktionsmittel zur Gewinnung des Rückstands niedrigen Schwefelgehalts.

44. Verfahren nach Anspruch 43, wobei der an Schwefel verarmte Flotationsschwanz einer Feststoff/Flüssigkeits-Abscheidung unterworfen wird, um eine zur Schaumflotation rückgeführte Flüssigkeit und einen der oxidativen Auslaugung zu unterwerfenden Feststoff zu gewinnen.

45. Verfahren nach Anspruch 43 oder 44, wobei die Schwefelextraktion bei einer Temperatur von etwa 90 - 150 °C durchgeführt wird.

46. Verfahren nach Anspruch 45, wobei das Schwefelextraktionsmittel aus der Gruppe Kerosin und Perchlorethylen ausgewählt ist.

47. Verfahren nach Anspruch 46, wobei die oxidative Auslaugung bei einer Temperatur von etwa 200 - 220 °C und einem Sauerstoffpartialdruck von etwa 500 - 1200 kPa unter sauren Bedingungen durchgeführt wird.

## Revendications

1. Procédé pour l'extraction de valeurs de Ni/Co à partir d'un minerai ou d'un concentré, comprenant les étapes consistant:
- à soumettre le minerai ou concentré à une oxydation sous pression en présence d'oxygène et d'une solution acide contenant des ions halogénure, cuivre et sulfate pour obtenir une liqueur contenant des valeurs de Ni/Co à partir de la suspension d'oxydation sous pression résultante;
- à soumettre la liqueur à un traitement de précipitation sélective pour obtenir un solide contenant l'hydroxyde Ni/Co; et
- à soumettre le solide à une étape de lixiviation de Ni/Co avec une solution d'ammonium pour produire une solution de lixiviation contenant des valeurs de Ni/Co et un résidu.

2. Procédé selon la revendication 1, comprenant de plus les étapes consistant:
- à soumettre le résidu à une étape de lavage acide pour produire une solution de lavage contenant des valeurs de Ni/Co et un résidu jetable; et
- à recycler la solution de lavage au traitement de précipitation sélectif.

3. Procédé selon la revendication 1, comprenant de plus les étapes consistant:
- à soumettre le résidu à une étape de lavage acide pour produire une solution de lavage contenant les valeurs de Ni/Co et un résidu jetable; et
- à traiter la solution de lavage pour la récupération des valeurs de Ni/Co à partir de celle-ci.

4. Procédé selon l'une quelconque des revendications précédentes, dans lequel le traitement de précipitation sélective comprend les étapes consistant:
- à soumettre la liqueur à une étape de précipitation à un pH d'environ 5 à 6 pour précipiter le fer, le cuivre ou le zinc présents dans la liqueur; et
- à soumettre la solution résultante à une étape de précipitation à un pH d'environ 7 à 8 pour obtenir le solide contenant l'hydroxyde Ni/Co.

5. Procédé selon l'une quelconque des revendications précédentes, dans lequel la liqueur contenant les valeurs de Ni/Co est obtenue en soumettant la suspension d'oxydation sous pression à une neutralisation à un pH prédéterminé auquel le cuivre, le fer ou le zinc présents dans la suspension est sous forme solide et les valeurs de Ni/Co sont en solution.

6. Procédé selon l'une quelconque des revendications 1 à 4, dans lequel la liqueur contenant les valeurs de Ni/Co est obtenue en soumettant la suspension d'oxydation sous pression à une neutralisation à un pH prédéterminé auquel les valeurs de Ni/Co sont sous forme solide et en soumettant les valeurs de Ni/Co solides à une lixiviation acide pour obtenir les valeurs de Ni/Co en solution.

7. Procédé selon la revendication 2 ou 3, comprenant de plus l'étape consistant à soumettre le résidu à une étape de lavage avant l'étape de lavage acide pour produire une deuxième solution de lavage contenant des valeurs de Ni/Co et un résidu qui est soumis à l'étape de lavage acide.

8. Procédé selon la revendication 7, comprenant de plus l'étape consistant à soumettre l'une ou les deux solution de lixiviation et solution de lavage supplémentaire contenant des valeurs de Ni/Co à une extraction par solvant pour récupérer des valeurs de Ni/Co à partir de celles-ci.

9. Procédé selon la revendication 8, dans lequel l'extraction par solvant est réalisée avec un agent d'extraction du nickel pour produire une solution contenant du nickel.

10. Procédé selon la revendication 8, dans lequel l'extraction par solvant est réalisée avec un agent d'extraction du cobalt pour produire une solution contenant du cobalt.

11. Procédé selon la revendication 8, dans lequel l'extraction par solvant comprend les étapes consistant:
- à réaliser une extraction par solvant du cobalt en présence d'ions magnésium en utilisant un agent d'extraction du cobalt pour produire un agent d'extraction du cobalt chargé avec des ions cobalt et un premier raffinat contenant des ions nickel et magnésium en solution;
- à réaliser une extraction par solvant du magnésium sur le premier raffinat en utilisant un agent d'extraction du magnésium pour produire un agent d'extraction du magnésium chargé avec des ions magnésium et cobalt et un deuxième raffinat; et
- à réaliser une extraction par solvant du nickel sur le deuxième raffinat en utilisant un agent d'extraction du nickel pour produire un agent d'extraction chargé en nickel et un troisième raffinat.

12. Procédé selon la revendication 11, dans lequel la solution de lixiviation et la solution de lavage supplémentaire sont soumises chacune à l'extraction par solvant, le troisième raffinat provenant de l'extraction par solvant de la solution de lixiviation étant recyclé à l'étape de lixiviation Ni/Co et le troisième raffinat provenant de l'extraction par solvant de la solution de lavage supplémentaire étant recyclé à l'étape de lavage avant l'étape de lavage acide.

13. Procédé selon la revendication 12, dans lequel les extractions par solvant respectives du Co, du Mg et du Ni sont réalisées avec des agents d'extraction habituels du Co, du Mg et du Ni.

14. Procédé selon la revendication 11, comprenant de plus l'étape de réextraction des agents d'extraction chargés en cobalt et en nickel pour produire respectivement des solutions de cobalt et de nickel.

15. Procédé selon la revendication 14, dans lequel, avant la réextraction, l'agent d'extraction chargé en cobalt est épuré avec une solution de concentré de cobalt qui est recyclée en provenance de la réextraction.

16. Procédé selon la revendication 11, dans lequel l'étape de lixiviation de Ni/Co et les extractions par solvant du cobalt, du magnésium et du nickel sont réalisées à une température d'environ 30°C à environ 60°C.

17. Procédé selon la revendication 16, dans lequel la lixiviation de Ni/Co et les extractions par solvant du cobalt, du magnésium et du nickel sont réalisées à une température d'environ 45°C à environ 50°C.

18. Procédé selon la revendication 4, comprenant de plus l'étape consistant à soumettre les solutions de cobalt et de nickel à une électro-récupération pour récupérer le cobalt et le nickel à partir de celles-ci.

19. Procédé selon la revendication 11, comprenant de plus l'étape consistant:
- à réextraire l'agent d'extraction du magnésium pour produire une liqueur mère contenant des ions magnésium et cobalt; et
- à recycler la liqueur mère vers le traitement de précipitation sélective.

20. Procédé selon la revendication 19, dans lequel, avant la réextraction de l'agent d'extraction du magnésium, il est épuré avec une solution de concentré de magnésium qui comprend une liqueur mère qui est recyclée en provenance de la réextraction de l'agent d'extraction du magnésium.

21. Procédé selon la revendication 11, dans lequel l'agent d'extraction du cobalt est similaire à l'agent d'extraction du magnésium, l'agent d'extraction étant plus sélectif pour le cobalt que pour le magnésium.

22. Procédé selon la revendication 8, dans lequel l'extraction par solvant comprend les étapes consistant:
- à réaliser une extraction par solvant du cobalt à un pH d'environ 6 à 8 pour produire une solution de cobalt et un premier raffinat; et
- à réaliser une extraction par solvant du nickel sur le premier raffinat sensiblement au même pH que l'extraction par solvant du cobalt pour produire une solution de nickel et un deuxième raffinat.

23. Procédé selon l'une quelconque des revendications précédentes, comprenant de plus l'étape consistant à réguler la concentration de nickel dans la solution de lixiviation à une valeur maximale d'environ 3 à 25 g/l.

24. Procédé selon la revendication 23, dans lequel la valeur maximale est d'environ 8 à 15 g/l.

25. Procédé selon la revendication 24, dans lequel la valeur maximale est d'environ 10 g/l.

26. Procédé selon l'une quelconque des revendications précédentes, dans lequel le traitement de précipitation sélectif est réalisé en présence d'ions magnésium pour produire un solide contenant du magnésium en plus de l'hydroxyde de Ni/Co et une solution résultante contenant du magnésium.

27. Procédé selon la revendication 26, comprenant de plus l'étape consistant à soumettre la solution résultante à une étape de précipitation pour produire un précipité d'hydroxyde de magnésium et un raffinat appauvri en magnésium.

28. Procédé selon la revendication 27, comprenant de plus l'étape consistant à recycler le raffinat appauvri en magnésium à l'oxydation sous pression.

29. Procédé selon la revendication 27 ou 28, comprenant de plus l'étape consistant à recycler au moins une partie du précipité de magnésium au traitement de précipitation sélective.

30. Procédé selon l'une quelconque des revendications précédentes, dans lequel l'étape de lixiviation Ni/Co est réalisée avec une solution de sulfate d'ammonium.

31. Procédé selon la revendication 30, dans lequel la solution de sulfate d'ammonium possède une concentration d'environ 150 à 250 g/l.

32. Procédé selon la revendication 31, dans lequel la solution de sulfate d'ammonium possède une concentration d'environ 200 g/l.

33. Procédé selon l'une quelconque des revendications 1 à 29, dans lequel l'étape de lixiviation de Ni/Co est réalisée avec une solution de carbonate d'ammonium.

34. Procédé selon l'une quelconque des revendications 1 à 29, dans lequel l'étape de lixiviation de Ni/Co est réalisée avec un mélange de sulfate d'ammonium et de carbonate d'ammonium en solution.

35. Procédé selon l'une quelconque des revendications précédentes, dans lequel un sel ou un concentré de cuivre est ajouté à la solution acide dans l'oxydation sous pression pour fournir le cuivre dans la solution acide.

36. Procédé selon la revendication 35, dans lequel le cuivre est recyclé à l'oxydation sous pression.

37. Procédé selon l'une quelconque des revendications précédentes, incluant l'étape consistant à soumettre la liqueur provenant de l'oxydation sous pression à une extraction par solvant du cuivre avant le traitement de précipitation sélective.

38. Procédé selon la revendication 1, dans lequel l'halogénure est un chlorure.

39. Procédé selon l'une quelconque des revendications 1 à 34 ou 38, dans lequel le minerai ou concentré comprend un concentré de sulfure qui contient également des valeurs de cuivre, et comprenant de plus les étapes consistant:
- à lixivier la suspension d'oxydation sous pression ou le solide obtenu à partir de celle-ci avec une solution de sulfate acide pour produire une liqueur de lixiviation contenant un sulfate de cuivre en solution et un résidu de lixiviation;
- à soumettre la liqueur de lixiviation à une extraction par solvant du cuivre pour produire une solution de concentré de cuivre et un raffinat appauvri en cuivre; et
- à recycler au moins une partie du raffinat appauvri en cuivre à l'étape de lixiviation avec du sulfate acide.

40. Procédé selon la revendication 39, comprenant de plus l'étape consistant à soumettre la liqueur à une extraction par solvant du cuivre avant le traitement de précipitation sélective pour produire une solution de concentré de cuivre supplémentaire.

41. Procédé selon la revendication 40, comprenant de plus l'étape consistant à soumettre les solutions de concentré de cuivre provenant des extractions par solvant du cuivre à une électro-récupération pour produire du cuivre métallique.

42. Procédé selon l'une quelconque des revendications précédentes, dans lequel le minerai ou concentré comprend un concentré de sulfure qui contient également des métaux précieux, et comprenant de plus les étapes consistant:
- à retirer le soufre élémentaire de la suspension d'oxydation sous pression ou d'un solide obtenu à partir de celle-ci pour obtenir un résidu à faible teneur en soufre; et
- à soumettre le résidu à faible teneur en soufre à une lixiviation oxydative à température et à pression élevées pour oxyder le soufre et les composés de métaux précieux présents dans le résidu à faible teneur en soufre pour produire un résidu destiné à l'extraction des métaux précieux à partir de celui-ci.

43. Procédé selon la revendication 42, dans lequel l'élimination du soufre comprend les étapes consistant:
- à soumettre la suspension d'oxydation sous pression ou le solide obtenu à partir de celle-ci à une flottation par moussage pour produire un concentré de flottation riche en soufre et une queue de flottation appauvrie en soufre; et
- à soumettre le résidu solide à une extraction du soufre avec un agent d'extraction approprié pour produire le résidu à faible teneur en soufre.

44. Procédé selon la revendication 43, dans lequel la queue de flottation appauvrie en soufre est soumise à une séparation solide/liquide pour produire un liquide qui est recyclé vers la flottation par moussage et un solide qui est soumis à la lixiviation oxydative.

45. Procédé selon la revendication 43 ou 44, dans lequel l'extraction du soufre est réalisée à une température d'environ 90°C à 150°C.

46. Procédé selon la revendication 45, dans lequel l'agent d'extraction du soufre est choisi dans le groupe formé par le kérosène et le perchloroéthylène.

47. Procédé selon la revendication 46, dans lequel la lixiviation oxydative est réalisée à une température d'environ 200° à 220°C et à une pression partielle d'oxygène d'environ 500 à 1 200 kPa dans des conditions acides.
